# EUROPEAN PATENT SPECIFICATION

(11) **EP 3 793 941 B1**
(45) Date of publication and mention of the grant of the patent: **24.06.2026**
(21) Application number: 19730947.9
(22) Date of filing: 13.05.2019
(51) Int. Cl.: C01B 32/194, C01B 32/198

(54) **PASTE WITH A HIGH CONCENTRATION OF AN EXFOLIATED LAYERED MATERIAL AND PROCESS FOR THE PREPARATION THEREOF**
PASTE MIT HOHER KONZENTRATION EINES EXFOLIERTEN SCHICHTMATERIALS UND VERFAHREN ZU DEREN HERSTELLUNG
PÂTE À HAUTE CONCENTRATION D'UN MATÉRIAU EN COUCHES EXFOLIÉ ET SON PROCÉDÉ DE PRÉPARATION

(30) Priority: 14.05.2018 IT 201800005314
(43) Date of publication of application: 24.03.2021
(73) Proprietor: Versalis S.p.A., 20097 San Donato Milanese (IT); Fondazione Istituto Italiano di Tecnologia, 16163 Genova (IT)
(72) Inventor: BALDUCCI, Daniele, 20097 San Donato Milanese (MI) (IT); SCAVELLO, Francesco, 46100 Mantova (IT); MARIANI, Paolo, 20097 San Donato Milanese (MI) (IT); CRUGLIANO, Manuel, 16163 Genova (IT); GAGLIANI, Luca, 16163 Genova (IT); PELLEGRINI, Vittorio, 16163 Genova (IT); BONACCORSO, Francesco, 16163 Genova (IT)
(74) Representative: Studio Torta S.p.A.
(86) International application number: PCT/IB2019/053922
(87) International publication number: WO 2019/220305

(56) References cited:
- EP-A1- 2 570 462
- EP-A1- 2 842 910
- WO-A1-2015/094888
- US-A1- 2017 179 490
- M. SOHAIL ET AL: "Modified and improved Hummer's synthesis of graphene oxide for capacitors applications", MODERN ELECTRONIC MATERIALS, vol. 3, no. 3, 1 September 2017 (2017-09-01), pages 110 - 116, XP055549520, ISSN: 2452-1779, DOI: 10.1016/j.moem.2017.07.002

## Description

The present invention relates to a paste with a high concentration of an exfoliated layered material.

More in particular, the present invention relates to a paste with a high concentration of an exfoliated layered material comprising: at least one exfoliated layered material, at least one first additive selected from liquid stabilizers at room temperature and, optionally, at least one organic solvent and/or at least one second additive selected from: light stabilizers, ultraviolet ray stabilizers (UV absorbers), metallic stearates, alcohols, ketones, ethers, glycols or poly-alkylene glycols.

The aforesaid paste with a high concentration of at least one exfoliated layered material can be advantageously used in numerous industrial applications such as, for example, as an additive in polymer materials, or as an additive in paints and silicone compositions, or as an additive in manufactured compositions such as fabrics.

The present invention also relates to a process for the preparation of said paste with a high concentration of an exfoliated layered material.

Dispersions of exfoliated layered materials, such as graphene or materials similar to graphene, are known in the state of the art.

For example, patent application US 2011/0017585 describes a process for preparing graphene nanoplatelets (NGPs) through ultra-sonication of pure graphite dispersed in a liquid medium, in the absence of surfactants, said graphite having a concentration in said liquid medium higher than 0.1 mg/ml and said liquid medium being characterized by a surface tension such as to allow high wettability of the graphene (for example, benzene, *n*-heptane).

American patent application US 2015/376014 describes a concentrated aqueous dispersion of graphene as well as a process for the preparation thereof. In particular, said patent application describes a dispersion of graphene nanoparticles in water, in the presence of a surfactant, characterized in that:
- the concentration of said graphene nanoparticles in water is from 5% by weight to 50% by weight;
- the C/O ratio in said graphene particles is ≥ 100:1;
- at least 90% of said graphene nanoparticles have a lateral dimension (x, y) from 10 nm to 5000 nm, and a thickness (z) from 0.34 nm to 30 nm, wherein the lateral dimension is always higher than the thickness (x, y > z);
- said surfactant is present in a quantity from 1% by weight to 20% by weight with respect to the weight of said graphene nanoparticles.

The aforesaid dispersion of graphene nanoparticles is carried out through a process comprising the expansion of intercalated graphite flakes having a lateral dimension ≤ 500 µm through exposure thereof to a temperature of at least 1300°C, for a time lower than 1 second, characterized in that: (a) the expanded graphite thus obtained is dispersed in water at a concentration from 5% by weight to 50% by weight, in the presence of a surfactant in a quantity from 1% by weight to 20% by weight with respect to the weight of said graphite; (b) the aqueous dispersion obtained in step (a) is subjected to an ultrasound treatment at an energy level ranging from 100 W to 2000 W, for a period ranging from 1 hour to 100 hours.

American patent application US 2016/0276056 describes a composition comprising a dispersion of graphene nanoplatelets (NGPs) comprising: from about 45% by weight to about 98.9% by weight with respect to the total weight of said dispersion of a dispersing medium selected, for example, from low boiling point solvents; from about 1% by weight to about 30% by weight with respect to the total weight of said dispersion of a dispersing agent of a material similar to graphene, said dispersing agent being selected, for example, from ethyl cellulose, cellulose triacetate; and from about 0.1% by weight to about 50% by weight with respect to the total weight of said dispersion of a material similar to graphene, said material similar to graphene being substantially uniformly dispersed in said dispersing medium. Both liquid dispersions, for example, through the sonication of solutions containing graphite flakes, dispersing agents and liquid dispersing media, and solid dispersions, for example, by combining the fused polymer with the liquid dispersion, dissolving the solid polymer in a miscible solvent and subsequently mixing with the liquid dispersion, dissolving the solid polymer in said liquid dispersion, or polymerizing one or more monomers in said liquid dispersion to form the solid polymer, can be obtained.

US2017/179490A1 discloses composite conductive materials in the form of a paste, including at least graphene-like graphite exfoliated from a graphite-based graphite carbon material and a conductive material dispersed in a base material.

EP2842910A1 discloses a method of preparing graphene paper, especially with a high surface area, comprising a step of preparing a graphene paste which is spread between two substrates and compressed and dried.

M. SOHAIL et al. "Modified and improved Hummer's synthesis of graphene oxide for capacitors applications", MODERN ELECTRONIC MATERIALS, (20170901), vol. 3, no. 3, pages 110 - 116, discloses a paste containing graphene oxide and a stabilizer and produced by a method for the production of graphene oxides based on the Hummer's synthesis.

EP2570462A1 discloses a method of producing graphene payers on a substrate; in some embodiments, a paste comprising graphene nanoplatelets and stabilizing additives is also disclosed.

Therefore, dispersions of graphene or materials similar to graphene are known in the presence of high quantities of organic solvents that are both expensive and problematic from an environmental safety point of view and that can also generally be removed before their final use, or of water and surfactants that cannot always be used as such as additives as the presence of water and surfactants could have a negative effect on the final use and, therefore, also in this case, require further treatments to remove them: in both cases there is, therefore, an increase in process times and costs, as well as the possible decline of the properties of the final product.

The Applicant therefore set out to solve the problem of identifying a paste with a high concentration of an exfoliated layered material, in particular graphene, that uses lower quantities of solvent or, even, avoids the use of solvent and, therefore, does not require the subsequent removal thereof, with a consequent reduction in process times and costs. Furthermore, the use of lower quantities of solvent, or the absence thereof, allows an improvement both from the point of view of operator safety, and from the environmental point of view.

The Applicant has now found that the use of at least a first additive selected from liquid stabilizers at room temperature allows a paste to be obtained with a high concentration of an exfoliated layered material, in particular graphene, in which the organic solvent is present in a low quantity or, even, absent. Said paste with a high concentration of an exfoliated layered material can be used as such without being subjected to further treatments either for the removal of the liquid medium, used (i.e., said first additive selected from liquid stabilizers at room temperature, and/or said organic solvent, and/or said second additive in the case of a second additive in liquid form), or for the removal of said second additive in the case of a second additive in solid form, with consequent process time and cost savings and an improvement from both the point of view of operator safety, and from the environmental point of view.

Therefore, the subject matter of the present invention is a paste with a high concentration of an exfoliated layered material as defined in claim 1.

For the purpose of the present description and of the following claims, the definitions of the numeric ranges always include the extremes unless specified otherwise.

For the purpose of the present description and of the following claims, the term "comprising" also includes the terms "which essentially consists of" or "which consists of". It is to be noted that for the purpose of the present invention, the optional presence of said organic solvent (c) serves for compatibilizing components (a) and (b) of the paste with a high concentration of an exfoliated layered material.

In accordance with a preferred embodiment of the present invention, claimed by claim 2, said paste with a high concentration of an exfoliated layered material comprises:
(a) from 1% by weight to 20% by weight, preferably from 10% by weight to 18% by weight, of at least one exfoliated layered material;
(b) from 10% by weight to 90% by weight, preferably from 15% by weight to 85% by weight, of at least one first additive selected from liquid stabilizers at room temperature;
(c) from 2% by weight to 15% by weight, preferably from 3% by weight to 8% by weight, of at least one organic solvent;

the sum of (a) + (b) + (c) being equal to 100,
in which components (a), (b), (c) are the same as defined in claim 1.

It is to be noted that for the purpose of the present invention, the optional presence of said at least one second additive (d) can replace the organic solvent (c).

In accordance with a further preferred embodiment of the present invention, claimed by claim 3, said paste with a high concentration of an exfoliated layered material comprises:
(a) from 1% by weight to 20% by weight, preferably from 10% by weight to 18% by weight, of at least one exfoliated layered material;
(b) from 10% by weight to 90% by weight, preferably from 15% by weight to 85% by weight, of at least one first additive selected from liquid stabilizers at room temperature;
(d) from 1% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;

the sum of (a) + (b) + (d) being equal to 100,
in which components (a), (b), (d) are the same as defined in claim 1.

In accordance with a further preferred embodiment of the present invention, claimed by claim 4, said paste with a high concentration of an exfoliated layered material comprises:
(a) from 1% by weight to 20% by weight, preferably from 10% by weight to 18% by weight, of at least one exfoliated layered material;
(b) from 10% by weight to 90% by weight, preferably from 15% by weight to 85% by weight, of at least one first additive selected from liquid stabilizers at room temperature;
(c) from 2% by weight to 15% by weight, preferably from 3% by weight to 8% by weight, of at least one organic solvent;
(d) from 1% by weight to 30% by weight, preferably from 5% by weight to 20% by weight, of at least one second additive selected from: light stabilizers, ultraviolet ray stabilizers (UV absorbers), metallic stearates, alcohols, ketones, ethers, glycols or poly-alkylene glycols;

the sum of (a) + (b) + (c) + (d) being equal to 100,
in which components (a), (b), (c), (d) are the same as defined in claim 1.

In accordance with the present invention, said at least one exfoliated layered material (a) is selected from: graphene; graphene oxide; reduced graphene oxide; graphene nanoplatelets. Preferably, said at least one exfoliated layered material (a) is selected from graphene, graphene nanoplatelets, or mixtures thereof.

For the purpose of the present invention, said exfoliated layered material (a) can be prepared through exfoliation processes in the liquid phase known in the state of the art, such as, for example, wet-jet milling, ultra-sonication, shear mixing. Preferably, said exfoliated layered material can be prepared through wet-jet milling: more details related to said wet-jet milling can be found, for example, both in international patent application WO 2017/089987 incorporated herein as reference, and in the following examples. Generally, said wet-jet milling comprises the exfoliation of a layered material (for example, graphite) using shear forces that are generated thanks to the passage of said layered material, properly dispersed in an organic solvent [for example, N-methyl-2-pyrrolidinone (NMP)], through a micronization device (known as a nozzle), capable to generate forces that can compress the dispersion of layered material/organic solvent obtained. By checking the chemical/physical parameters of the dispersing medium used (i.e. said organic solvent) and the fluid dynamic parameters of the dispersion (i.e. layered material/organic solvent dispersion), it is possible to process said layered material by exposing it to one or more wet-jet-milling cycles through said micronization device (i.e. nozzle). Subsequently, said dispersing medium (i.e. said organic solvent) is removed through the use of a rotating evaporator and the exfoliated material obtained is dispersed again in an organic solvent suitable for the subsequent freeze-drying [for example, dimethylsulfoxide (DMS)] in order to obtain a powder comprising flakes of exfoliated layered material.

For the purpose of the present description and of the following claims, said exfoliated layered material is defined dimensionally with reference to a system of Cartesian axes x, y and z, being understood that the particles that compose it are substantially flat platelets but that can also have an irregular shape. In any case, the lateral dimension and thickness provided with reference to directions x, y and z, are to be considered the maximum dimensions in each of the aforesaid directions.

The lateral dimensions (x, y) of the particles of said exfoliated material have been determined by direct measurement with the Transmission Electron Microscope (TEM). For that purpose, an aliquot of the dispersion obtained through wet-jet milling is picked and diluted properly, for example with a dilution ratio of 1:1000 with the same organic solvent used for the exfoliation process. After depositing a drop on a appropriated grille for electronic microscopy, it is possible to obtain images of the flakes of exfoliated material, using the aforesaid Transmission Electron Microscope (TEM). Through processing software coupled to said microscope, the lateral dimensions of the flakes of exfoliated material are measured and said dimensions are calculated from statistical data deriving from the analysis of at least a hundred flakes.

The thickness (z) of the particles of said exfoliated layered material has been determined with an Atomic Force Microscope (AFM), which is essentially a profilometer with sub-nanometer resolution, widely used for the (mainly morphological) characterization of surfaces and nanomaterials. This type of analysis is commonly used to evaluate the thickness of flakes of exfoliated layered material, in particular graphene, obtained according to any process reported above, and therefore to obtain the number of layers of which they are composed. For that purpose, an aliquot of the dispersion obtained through wet-jet milling is picked and diluted properly, for example with a dilution ratio of 1:30 with the same organic solvent used for the exfoliation process. 100 microliters of the sample thus obtained are deposited on a silicon wafer that is dried at a temperature of 50°C, for a night and then subjected to scanning through an Atomic Force Microscope (AFM) (AFM Bruker Innova) in tapping mode. Through processing software coupled to said microscope, the thicknesses of the flakes of exfoliated material are measured and said dimensions are calculated from statistical data deriving from the analysis of at least a hundred flakes.

In accordance with a preferred embodiment of the present invention, the particles of said exfoliated layered material (a) have a lateral dimension (x, y) not higher than 10000 nm, preferably ranging from 4 nm to 5500 nm.

In accordance with a preferred embodiment of the present invention, the particles of said exfoliated layered material (a) have a thickness (z) not higher than 50 nm, preferably ranging from 0.2 nm to 15 nm.

It is to be noted that, in any case, the lateral dimension is always much higher than the thickness (x, y > z).

In accordance with a preferred embodiment of the present invention, the particles of said exfoliated layered material (a) have a surface area higher than 10 m²/g, preferably higher than 40 m²/g.

In accordance with a particularly preferred embodiment of the present invention, the particles of said exfoliated layered material (a) have a surface area ranging from 20 m²/g to 3000 m²/g, preferably ranging from 30 m²/g to 2600 m²/g.

The surface area was measured according to the BET nitrogen adsorption method.

In accordance with the present invention, said first additive selected from liquid stabilizers at room temperature (b) is selected, from:
(i) phenol-based antioxidants such as, for example, sterically hindered phenols such as, for example, 2,6-di- t-butyl-4-methylphenol, 2,6-di-*t*-butyl-4-nonyl-phenol, 2,2'-methylene-bis-(4-methyl-6-*t*-butyl-phenol), 4,4'-butylidene-bis- (2-*t*-butyl-5-methylphenol), 4,4'-thio-bis-(2-*t*-butyl-5-methyl-phenol), 2,2'-thio-bis(6-*t*-butyl-4-methylphenol), 2,5-di-*t*-amyl-hydroquinone; sterically hindered polymeric phenols; tris-(3,5-di-*t*-butyl-4-hydroxybenzyl)isocyanurate, 2,2'-thiodietylbis-(3,5-di-*t*-butyl-4-hydroxyphenyl)propionate, 1,1,3- tris-(2'-methyl-4'-hydroxy-5'-*t*-butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methyl-cyclohexyl)phenol, *N,N'*-hexamethylene bis-(3,5-di-*t*-butyl-4-hydroxy-hydrocinamide), C₃-C₁₅ alkyl esters of 3,5-bis(1,1-dimethyl)-4-hydroxybenzenepropanoic acid, or mixtures thereof; antioxidants based on vitamin E, or mixtures thereof; or mixtures thereof;
(ii) antioxidants based on organic phosphites such as, for example, tris-(2,4-di-*t*-butylphenyl)phosphite, tris-2,4-bis(1,1-dimethylpropyl)phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]bis[4-(1,1-dimethylpropyl)phenyl]phosphite, bis[tris-(2,4-di-*t*-butyl-phenyl)phosphite plus distearyl-3,3-thiodipropionate (about 3% by weight on the weight of the phosphite), bis-(2,4-di-*t*-butyl-phenyl)pentaerythritol-diphosphite, tetrakis-(2,4-di-*t*-butyl-phenyl)-4,4'-biphenylene-diphosphonite, tris-(*p*-nonylphenyl)phosphite, di-*iso*-decyl-phenyl-phosphite, diphenyl-*iso*-decyl-phosphite, tri-*iso*-decyl-phosphite, trilauryl-phosphite, or mixtures thereof; organic phosphonates; organic phosphonites; organic phosphates such as, for example, di(stearyl)pentaerythritol diphosphite, tetrakis (2,4-di-t-butylphenyl)-4,4'-biphenylene diphosphonite, or mixtures thereof; or mixtures thereof;
or mixtures thereof.

Specific examples of antioxidants that can be advantageously used for the purpose of the present invention and that are currently available on the market are: Anox^{®} 1315 by Addivant (sterically hindered phenol), Weston^{®} 705 by Addivant (phosphite), Irgafos^{®} 168 by Basf (phosphite), Irganox^{®} E 201 by Basf (antioxidant based on vitamin E).

In accordance with a preferred embodiment of the present invention, said first additive selected from liquid stabilizers at room temperature (b) can comprise:
- from 10% by weight to 90% by weight, preferably from 20% by weight to 80% by weight, with respect to the total weight of said liquid stabilizer, of an antioxidant selected from (i) phenolic based antioxidants;
- from 10% by weight to 90% by weight, preferably from 20% by weight to 80% by weight, with respect to the total weight of said liquid stabilizer, of an antioxidant selected from (ii) antioxidants based on organic phosphites.

In accordance with the present invention, said organic solvent (c) is selected from: high boiling point aromatic solvents such as, for example, benzene, methylbenzene, ethylbenzene, xylene, toluene, or mixtures thereof; hydrocarbon solvents with a low aromatic content (i.e. aromatic content ≤ 0.1) such as, for example, hydrocarbon solvents of the Spirdane^{®} series by Total (e.g., Spirdane^{®} D60), or mixtures thereof; or mixtures thereof. Ethylbenzene is preferred.

In accordance with the present invention, said second additive (d) is selected from:
- light stabilizers such as, for example, sterically hindered amines;
- UV stabilizers (UV absorbers) such as, for example: triazines, benzooxazinones, benzotriazoles, benzophenones, benzoates, formamidines, cinnamates or propenoates, aromatic propandions, benzoimidazoles, cycloaliphatic ketones, formanilides including oxamides, cyanoacrylates, benzopyranones, salicylates, or mixtures thereof;
- metallic stearates such as, for example, zinc stearate, calcium stearate, magnesium stearate, or mixtures thereof;
- alcohols such as, for example, iso-propanol, n-propanol, iso-butanol, n-butanol, or mixtures thereof;
- ketones such as, for example, acetone, methyl-ethyl ketone, dibenzyl ketone, cyclohexanone, or mixtures thereof;
- ethers such as, for example, ethyl ether, diethyl ether, butyl ether, dibutyl ether, diphenyl ether, dibenzyl ether, or mixtures thereof;
- glycols or poly-alkylene glycols such as, for example, ethylene glycol, propylene glycol, polyethylene glycol, polypropylene glycol, or mixtures thereof;
or mixtures thereof.

Specific examples of sterically hindered amines that can be advantageously used for the purpose of the present invention and that are currently available on the market are: Tinuvin^{®} 292, Tinuvin^{®} 1130 by Ciba.

Specific examples of UV stabilizers (UV absorbers) that can be used in the present invention and that are currently available on the market are the products Chimassorb^{®} 81 by Basf (benzophenone), Ciba^{®} Tinuvin^{®} 326 by Ciba (benzotriazole).

As mentioned above, the present invention also relates to a process for the preparation of a paste with a high concentration of an exfoliated layered material.

Consequently, further subject matter of the present invention is a process for the preparation of a paste with a high concentration of an exfoliated layered material as claimed in claim 10 and comprising the following steps:
(a₁) mixing at least one first additive selected from liquid stabilizers at room temperature, preferably at least one antioxidant selected from (i) phenol based antioxidants and at least one antioxidant selected from (ii) antioxidants based on organic phosphites with, optionally, at least one organic solvent and/or with, optionally, at least one second additive selected from: light stabilizers, ultraviolet ray stabilizers (UV absorbers), metallic stearates, alcohols, ketones, ethers, glycols or poly-alkylene glycols, to obtain a mixture;
(b₁) adding at least one exfoliated layered material to the mixture obtained in step (a₁) and subjecting it to mixing, obtaining a paste with a high concentration of an exfoliated layered material;
(c₁) recovering the paste obtained in step (b₁).

In accordance with a preferred embodiment of the present invention, said step (a₁) can be carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm.

In accordance with a preferred embodiment of the present invention, said step (b₁) can be carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm.

For the purpose of obtaining a more uniform paste with a high concentration of exfoliated layer material, said step (b₁) is preferably carried out in a planetary mixer that allows the simultaneous mixing and de-airing of the mixture.

For the purpose of understanding the present invention better and to put it into practice, below are some illustrative and non-limiting examples thereof.

### EXAMPLE 1

### Preparation of graphene

For the purpose, the exfoliation system described and claimed in patent application WO 2017/089987 mentioned above, was used.

3 g of graphite flakes (Aldrich) were dispersed in 300 ml of *N*-methyl-2-pyrrolidone (NMP): the dispersion obtained was loaded into an exfoliation station including a device (nozzle) for wet-jet milling operating under the following conditions:
- temperature: room temperature (25°C);
- pressure: ranging from 150 to 250 MPa;
- number of wet-jet milling cycles: 3;
- duration for each cycle: ranging from 1.2 to 2.25 minutes.

At the end of said wet-jet milling cycles, everything was transferred into a rotary evaporator for the purpose of removing the solvent used and the exfoliated material obtained was dispersed again in 100 ml of dimethylsulfoxide (DMS) (Aldrich), poured into an aluminum container and frozen at -28°C. Subsequently, the solid obtained was transferred to a freeze-dryer and heated to 20°C obtaining 3 g of a powder consisting of graphene flakes having the following dimensions (the measurements were carried out as reported above):
- lateral dimension (x, y) ranging from 5 nm to 5000 nm;
- thickness ranging from 0.3 nm to 10 nm;
- surface area: ranging from 50 m²/g to 2000 m²/g.

### EXAMPLE 2

### Preparation of graphene paste

The following were loaded into a planetary mixer, provided with a magnetic stirrer: 10 ml of Weston^{®} 705 (Addivant) (phosphite), 5 ml of Irganox^{®} E 201 by Basf (antioxidant based on vitamin E) and 0.75 ml of ethylbenzene (Aldrich): the mixture obtained was kept, under constant stirring, at 2000 rpm, at room temperature (25°C), for 3 minutes. Subsequently, 2.7 g of the powder consisting of graphene flakes obtained as described in Example 1 were added to the mixture obtained: everything was left, under constant stirring, at 2000 rpm, at room temperature (25°C), for 35 minutes, obtaining 18.3 g of a graphene paste having the following concentration:
- graphene: 14.8% by weight;
- Weston^{®} 705: 55.8% by weight;
- Irganox^{®} E 201: 25.9% by weight;
- ethylbenzene: 3.5% by weight.

## Claims

1. Paste with a high concentration of an exfoliated layered material comprising:
(a) from 1% by weight to 20% by weight, preferably from 10% by weight to 18% by weight, of at least one exfoliated layered material selected from: graphene; graphene oxide; reduced graphene oxide; graphene nanoplatelets;
(b) from 10% by weight to 90% by weight, preferably from 15% by weight to 85% by weight, of at least one first additive selected from liquid stabilizers at room temperature selected from:
(i) phenol based antioxidants such as phenol sterically hindered such as 2,6-di-t-butyl-4-methylphenol, 2,6-di-*t*-butyl-4-nonyl-phenol, 2,2'-methylene-bis-(4-methyl-6-*t-*butyl-phenol), 4,4'-butylidene-bis-(2-*t*-butyl-5-methyl-phenol), 4,4'-thio-bis-(2-*t*-butyl-5-methyl-phenol), 2,2'-thio-bis(6-t-butyl-4-methyl-phenol), 2,5-di-*t*-amyl-hydroquinone; sterically hindered polymeric phenols, tris-(3,5-di-t-butyl-4-hydroxybenzyl)isocyanurate, 2,2'-thiodietyl bis-(3,5-di-*t*-butyl-4-hydroxyphenyl)propionate, 1,1,3-tris- (2'-methyl-4'-hydroxy-5'-*t*-butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methylcyclohexyl) phenol, N,N'-hexamethylenebis-(3,5-di-t-butyl-4-hydroxyhydrocinnamide), C₃-C₁₅ alkyl esters of 3,5-bis(1,1-dimethyl)4-hydroxybenzenepropanoic acid, or mixtures thereof; antioxidants based on vitamin E, or mixtures thereof; or mixtures thereof;
(ii) antioxidants based on organic phosphites such as tris-(2,4-di-*t*-butylphenyl)phosphite, tris-2,4-bis (1,1-dimethylpropyl)phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]-bis[4-(1,1-dimethylpropyl)phenyl] phosphite, bis[tris-(2,4-di-*t*-butyl-phenyl)-phosphite plus distearyl-3,3-thiodipropionate (about 3% by weight on the weight of the phosphite), bis-(2,4-di-*t*-butyl-phenyl)pentaerythritol-diphosphite, tetrakis-(2,4-di-t-butyl-phenyl)-4,4'-biphenylene-diphosphonite, tris-(*p-*nonylphenyl)phosphite, di-*iso*-decyl-phenyl-phosphite, diphenyl-*iso-*decyl phosphite, tri-*iso*-decyl phosphite, trilauryl-phosphite, or mixtures thereof; organic phosphonates; organic phosphonites; organic phosphates such as di(stearyl)pentaerythritol diphosphite, tetrakis(2,4-dit-butylphenyl)-4,4'-biphenylene diphosphonite, or mixtures thereof; or mixtures thereof;
or mixtures thereof;
(c) from 0% by weight to 15% by weight, preferably from 3% by weight to 8% by weight, of at least one organic solvent selected from: high boiling point aromatic solvents such as benzene, methylbenzene, ethylbenzene, xylene, toluene, or mixtures thereof; low aromatic hydrocarbon solvents (i.e. aromatic content ≤ 0.1) such as hydrocarbon solvents of the Spirdane^{®} series by Total, or mixtures thereof;
(d) from 0% by weight to 30% by weight, preferably from 5% by weight to 20% by weight, of at least one second additive selected from:
- light stabilizers such as sterically hindered amines;
- UV stabilizers (UV absorbers), such as: triazines, benzooxazinones, benzotriazoles, benzophenones, benzoates, formamidines, cinnamates or propenoates, aromatic propandiones, benzoimidazoles, cycloaliphatic ketones, formanilides including oxamides, cyanoacrylates, benzopyranones, salicylates, or mixtures thereof;
- metallic stearates such as zinc stearate, calcium stearate, magnesium stearate, or mixtures thereof;
- alcohols such as iso-propanol, n-propanol, iso-butanol, n-butanol, or mixtures thereof;
- ketones such as acetone, methyl-ethyl ketone, dibenzyl ketone, cyclohexanone, or mixtures thereof;
- ethers such as ethyl ether, diethyl ether, butyl ether, dibutyl ether, diphenyl ether, dibenzyl ether, or mixtures thereof;
- glycols or poly-alkylene glycols such as ethylene glycol, propylene glycol, polyethylene glycol, polypropylene glycol, or mixtures thereof;
or mixtures thereof;
the sum of (a) + (b) + (c) + (d) being equal to 100.

2. Paste with a high concentration of an exfoliated layered material comprising:
(a) from 1% by weight to 20% by weight, preferably from 10% by weight to 18% by weight, of at least one exfoliated layered material selected from: graphene; graphene oxide; reduced graphene oxide; graphene nanoplatelets;
(b) from 10% by weight to 90% by weight, preferably from 15% by weight to 85% by weight, of at least one first additive selected from liquid stabilizers at room temperature selected from:
(i) phenol based antioxidants such as phenol sterically hindered such as 2,6-di-t-butyl-4-methylphenol, 2,6-di-t-butyl-4-nonyl-phenol, 2,2'-methylene-bis-(4-methyl-6- t-butyl-phenol), 4,4'-butylidene-bis-(2-t-butyl-5-methyl-phenol), 4,4'-thio-bis-(2-t-butyl-5-methyl-phenol), 2,2'-thio-bis(6-t-butyl-4-methyl-phenol), 2,5-di-t-amyl-hydroquinone; sterically hindered polymeric phenols, tris-(3,5-di-t-butyl-4-hydroxybenzyl)isocyanurate, 2,2'-thiodietyl bis-(3,5-di-t-butyl-4-hydroxyphenyl)propionate, 1,1,3-tris- (2'-methyl-4'-hydroxy-5'-t-butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methylcyclohexyl) phenol, N,N'-hexamethylenebis-(3,5-di-t-butyl-4-hydroxyhydrocinnamide), C3-C15 alkyl esters of 3,5-bis(1,1-dimethyl)4-hydroxybenzenepropanoic acid, or mixtures thereof; antioxidants based on vitamin E, or mixtures thereof; or mixtures thereof;
(ii) antioxidants based on organic phosphites such as tris-(2,4-di-t-butylphenyl)phosphite, tris-2,4-bis (1,1-dimethylpropyl)phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]-bis[4-(1,1-dimethylpropyl)phenyl] phosphite, bis[tris-(2,4-di-t-butyl-phenyl)-phosphite plus distearyl-3,3-thiodipropionate (about 3% by weight on the weight of the phosphite), bis-(2,4-di-t-butyl-phenyl)pentaerythritol-diphosphite, tetrakis-(2,4-di-t-butyl-phenyl)-4,4'-biphenylene-diphosphonite, tris-(p-nonylphenyl)phosphite, di-iso-decyl-phenyl-phosphite, diphenyl-iso-decyl phosphite, tri-iso-decyl phosphite, trilauryl-phosphite, or mixtures thereof; organic phosphonates; organic phosphonites; organic phosphates such as di(stearyl)pentaerythritol diphosphite, tetrakis(2,4-dit-butylphenyl)-4,4'-biphenylene diphosphonite, or mixtures thereof; or mixtures thereof;
or mixtures thereof;
(c) from 2% by weight to 15% by weight, preferably from 3% by weight to 8% by weight, of at least one organic solvent selected from: high boiling point aromatic solvents such as benzene, methylbenzene, ethylbenzene, xylene, toluene, or mixtures thereof; low aromatic hydrocarbon solvents (i.e. aromatic content ≤ 0.1) such as hydrocarbon solvents of the Spirdane^{®} series by Total, or mixtures thereof;
the sum of (a) + (b) + (c) being equal to 100.

3. Paste with a high concentration of an exfoliated layered material comprising:
(a) from 1% by weight to 20% by weight, preferably from 10% by weight to 18% by weight, of at least one exfoliated layered material selected from: graphene; graphene oxide; reduced graphene oxide; graphene nanoplatelets;
(b) from 10% by weight to 90% by weight, preferably from 15% by weight to 85% by weight, of at least one first additive selected from liquid stabilizers at room temperature selected from:
(i) phenol based antioxidants such as phenol sterically hindered such as 2,6-di-t-butyl-4-methylphenol, 2,6-di-t-butyl-4-nonyl-phenol, 2,2'-methylene-bis-(4-methyl-6- t-butyl-phenol), 4,4'-butylidene-bis-(2-t-butyl-5-methyl-phenol), 4,4'-thio-bis-(2-t-butyl-5-methyl-phenol), 2,2'-thio-bis(6-t-butyl-4-methyl-phenol), 2,5-di-t-amyl-hydroquinone; sterically hindered polymeric phenols, tris-(3,5-di-t-butyl-4-hydroxybenzyl)isocyanurate, 2,2'-thiodietyl bis-(3,5-di-t-butyl-4-hydroxyphenyl)propionate, 1,1,3-tris- (2'-methyl-4'-hydroxy-5'-t-butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methylcyclohexyl) phenol, N,N'-hexamethylenebis-(3,5-di-t-butyl-4-hydroxyhydrocinnamide), C3-C15 alkyl esters of 3,5-bis(1,1-dimethyl)4-hydroxybenzenepropanoic acid, or mixtures thereof; antioxidants based on vitamin E, or mixtures thereof; or mixtures thereof;
(ii) antioxidants based on organic phosphites such as tris-(2,4-di-t-butylphenyl)phosphite, tris-2,4-bis (1,1-dimethylpropyl)phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]-bis[4-(1,1-dimethylpropyl)phenyl] phosphite, bis[tris-(2,4-di-t-butyl-phenyl)-phosphite plus distearyl-3,3-thiodipropionate (about 3% by weight on the weight of the phosphite), bis-(2,4-di-t-butyl-phenyl)pentaerythritol-diphosphite, tetrakis-(2,4-di-t-butyl-phenyl)-4,4'-biphenylene-diphosphonite, tris-(p-nonylphenyl)phosphite, di-iso-decyl-phenyl-phosphite, diphenyl-iso-decyl phosphite, tri-iso-decyl phosphite, trilauryl-phosphite, or mixtures thereof; organic phosphonates; organic phosphonites; organic phosphates such as di(stearyl)pentaerythritol diphosphite, tetrakis(2,4-dit-butylphenyl)-4,4'-biphenylene diphosphonite, or mixtures thereof; or mixtures thereof;
or mixtures thereof;
(d) from 1% by weight to 30% by weight, preferably from 5% by weight to 20% by weight, of at least one second additive selected from:
- light stabilizers such as sterically hindered amines;
- UV stabilizers (UV absorbers), such as: triazines, benzooxazinones, benzotriazoles, benzophenones, benzoates, formamidines, cinnamates or propenoates, aromatic propandiones, benzoimidazoles, cycloaliphatic ketones, formanilides including oxamides, cyanoacrylates, benzopyranones, salicylates, or mixtures thereof;
- metallic stearates such as zinc stearate, calcium stearate, magnesium stearate, or mixtures thereof;
- alcohols such as iso-propanol, n-propanol, iso-butanol, n-butanol, or mixtures thereof;
- ketones such as acetone, methyl-ethyl ketone, dibenzyl ketone, cyclohexanone, or mixtures thereof;
- ethers such as ethyl ether, diethyl ether, butyl ether, dibutyl ether, diphenyl ether, dibenzyl ether, or mixtures thereof;
- glycols or poly-alkylene glycols such as ethylene glycol, propylene glycol, polyethylene glycol, polypropylene glycol, or mixtures thereof; or mixtures thereof;
the sum of (a) + (b) + (d) being equal to 100.

4. Paste with a high concentration of an exfoliated layered material according to claim 1, comprising:
(a) from 1% by weight to 20% by weight, preferably from 10% by weight to 18% by weight, of said at least one exfoliated layered material selected from: graphene; graphene oxide; reduced graphene oxide; graphene nanoplatelets;
(b) from 10% by weight to 90% by weight, preferably from 15% by weight to 85% by weight, of said at least one first additive selected from liquid stabilizers at room temperature selected from:
(i) phenol based antioxidants such as phenol sterically hindered such as 2,6-di-t-butyl-4-methylphenol, 2,6-di-t-butyl-4-nonyl-phenol, 2,2'-methylene-bis-(4-methyl-6- t-butyl-phenol), 4,4'-butylidene-bis-(2-t-butyl-5-methyl-phenol), 4,4'-thio-bis-(2-t-butyl-5-methyl-phenol), 2,2'-thio-bis(6-t-butyl-4-methyl-phenol), 2,5-di-t-amyl-hydroquinone; sterically hindered polymeric phenols, tris-(3,5-di-t-butyl-4-hydroxybenzyl)isocyanurate, 2,2'-thiodietyl bis-(3,5-di-t-butyl-4-hydroxyphenyl)propionate, 1,1,3-tris- (2'-methyl-4'-hydroxy-5'-t-butyl-phenyl)butane, 2,2'-methylene-bis-6-(1-methylcyclohexyl)-para-cresol, 3,4-dihydro-2,5,7,8-tetramethyl-2-(4,8,12-trimethyltridecyl)-2H-1-benzopyran-6-ol, 2,4-dimethyl-6-(1-methylcyclohexyl) phenol, N,N'-hexamethylenebis-(3,5-di-t-butyl-4-hydroxyhydrocinnamide), C3-C15 alkyl esters of 3,5-bis(1,1-dimethyl)4-hydroxybenzenepropanoic acid, or mixtures thereof; antioxidants based on vitamin E, or mixtures thereof; or mixtures thereof;
(ii) antioxidants based on organic phosphites such as tris-(2,4-di-t-butylphenyl)phosphite, tris-2,4-bis (1,1-dimethylpropyl)phenylphosphite, tris-4-(1,1-dimethylpropyl)phenylphosphite, bis-[2,4-bis(1,1-dimethylpropyl)phenyl][4-(1,1-dimethylpropyl)phenyl]phosphite, [2,4-bis(1,1-dimethylpropyl)phenyl]-bis[4-(1,1-dimethylpropyl)phenyl] phosphite, bis[tris-(2,4-di-t-butyl-phenyl)-phosphite plus distearyl-3,3-thiodipropionate (about 3% by weight on the weight of the phosphite), bis-(2,4-di-t-butyl-phenyl)pentaerythritol-diphosphite, tetrakis-(2,4-di-t-butyl-phenyl)-4,4'-biphenylene-diphosphonite, tris-(p-nonylphenyl)phosphite, di-iso-decyl-phenyl-phosphite, diphenyl-iso-decyl phosphite, tri-iso-decyl phosphite, trilauryl-phosphite, or mixtures thereof; organic phosphonates; organic phosphonites; organic phosphates such as di(stearyl)pentaerythritol diphosphite, tetrakis(2,4-dit-butylphenyl)-4,4'-biphenylene diphosphonite, or mixtures thereof; or mixtures thereof;
or mixtures thereof;
(c) from 2% by weight to 15% by weight, preferably from 3% by weight to 8% by weight, of said at least one organic solvent selected from: high boiling point aromatic solvents such as benzene, methylbenzene, ethylbenzene, xylene, toluene, or mixtures thereof; low aromatic hydrocarbon solvents (i.e. aromatic content ≤ 0.1) such as hydrocarbon solvents of the Spirdane^{®} series by Total, or mixtures thereof;
(d) from 1% by weight to 30% by weight, preferably from 5% by weight to 20% by weight, of said at least one second additive selected from:
- light stabilizers such as sterically hindered amines;
- UV stabilizers (UV absorbers), such as: triazines, benzooxazinones, benzotriazoles, benzophenones, benzoates, formamidines, cinnamates or propenoates, aromatic propandiones, benzoimidazoles, cycloaliphatic ketones, formanilides including oxamides, cyanoacrylates, benzopyranones, salicylates, or mixtures thereof;
- metallic stearates such as zinc stearate, calcium stearate, magnesium stearate, or mixtures thereof;
- alcohols such as iso-propanol, n-propanol, iso-butanol, n-butanol, or mixtures thereof;
- ketones such as acetone, methyl-ethyl ketone, dibenzyl ketone, cyclohexanone, or mixtures thereof;
- ethers such as ethyl ether, diethyl ether, butyl ether, dibutyl ether, diphenyl ether, dibenzyl ether, or mixtures thereof;
- glycols or poly-alkylene glycols such as ethylene glycol, propylene glycol, polyethylene glycol, polypropylene glycol, or mixtures thereof; or mixtures thereof;
the sum of (a) + (b) + (c) + (d) being equal to 100.

5. Paste with a high concentration of an exfoliated layered material according to any of the previous claims, wherein the particles of said exfoliated layered material (a) have a lateral dimension (x, y) not higher than 10000 nm, preferably ranging from 5 nm to 5500 nm.

6. Paste with a high concentration of an exfoliated layered material according to any one of the previous claims, wherein the particles of said exfoliated layered material (a) have a thickness (z) not higher than 50 nm, preferably ranging from 0.2 nm to 15 nm.

7. Paste with a high concentration of an exfoliated layered material according to any one of the previous claims, wherein the particles of said exfoliated layered material (a) have a BET surface area higher than 10 m²/g, preferably higher than 40 m²/g.

8. Paste with a high concentration of an exfoliated layered material according to claim 7, wherein the particles of said exfoliated layered material (a) have a BET surface area ranging from 20 m²/g to 3000 m²/g, preferably ranging from 300 m²/g to 2600 m²/g.

9. Paste with a high concentration of an exfoliated layered material according to any one of the preceding claims, wherein said liquid stabilizer at room temperature (b) comprises:
- from 10% by weight to 90% by weight, preferably from 20% by weight to 80% by weight, with respect to the total weight of said liquid stabilizer, of an antioxidant selected from (i) phenol based antioxidants;
- from 10% by weight to 90% by weight, preferably from 20% by weight to 80% by weight, with respect to the total weight of said liquid stabilizer, of an antioxidant selected from (ii) antioxidants based on organic phosphites.

10. Process for the preparation of a paste with a high concentration of an exfoliated layered material according to any one of claims 1 to 9, comprising the following steps:
(a₁) mixing at least one first additive selected from liquid stabilizers at room temperature, preferably at least one antioxidant selected from (i) phenol based antioxidants and at least one antioxidant selected from (ii) antioxidants based on organic phosphites with, optionally, at least one organic solvent and/or with, optionally, at least one second additive selected from: light stabilizers, ultraviolet ray stabilizers (UV absorbers), metallic stearates, alcohols, ketones, ethers, glycols or poly-alkylene glycols, to obtain a mixture;
(b₁) adding at least one exfoliated layered material to the mixture obtained in step (a₁) and subjecting it to mixing, obtaining a paste with a high concentration of an exfoliated layered material;
(c₁) recovering the paste obtained in step (b₁).

11. Process for the preparation of a paste with a high concentration of an exfoliated layered material according to claim 10, wherein:
- said step (a₁) is carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm; and/or
- said step (b₁) is carried out at a temperature ranging from 10°C to 50°C, preferably ranging from 20°C to 30°C, for a time ranging from 1 minute to 60 minutes, preferably ranging from 2 minutes to 40 minutes, at a rotation speed ranging from 100 rpm to 4000 rpm, preferably ranging from 1500 rpm to 3000 rpm.

## Patentansprüche

1. Paste mit einer hohen Konzentration eines exfolierten Schichtmaterials, umfassend:
(a) von 1 Gew.-% bis 20 Gew.-%, vorzugsweise von 10 Gew.-% bis 18 Gew.-%, mindestens eines exfolierten Schichtmaterials, ausgewählt aus: Graphen; Graphenoxid; reduziertem Graphenoxid; Graphen-Nanoplättchen;
(b) von 10 Gew.-% bis 90 Gew.-%, vorzugsweise von 15 Gew.-% bis 85 Gew.-%, mindestens eines ersten Additivs, ausgewählt aus bei Raumtemperatur flüssigen Stabilisatoren, ausgewählt aus:
(i) Antioxidantien auf Phenolbasis, wie sterisch gehinderte Phenole, wie 2,6-Di-*t*-butyl-4-methylphenol, 2,6-Di-*t*-butyl-4-nonylphenol, 2,2'-Methylen-bis-(4-methyl-6-*t*-butylphenol), 4,4'-Butyliden-bis-(2-*t*-butyl-5-methylphenol), 4,4'-Thio-bis-(2-*t*-butyl-5-methylphenol), 2,2'-Thio-bis(6-*t*-butyl-4-methylphenol), 2,5-Di-*t*-amylhydrochinon; sterisch gehinderte polymere Phenole, Tris-(3,5-di-*t*-butyl-4-hydroxybenzyl)isocyanurat, 2,2'-Thiodiethyl-bis-(3,5-di-*t*-butyl-4-hydroxyphenyl)propionat, 1,1,3-Tris-(2'-methyl-4'-hydroxy-5'-*t*-butylphenyl)butan, 2,2'-Methylen-bis-6-(1-Methylcyclohexyl)-*p*-kresol, 3,4-Dihydro-2,5,7,8-tetramethyl-2-(4,8,12-trimethyltridecyl)-2H-1-benzopyran-6-ol, 2,4-Dimethyl-6-(1-methylcyclohexyl)phenol, N,N'-Hexamethylenbis-(3,5-di-*t*-butyl-4-hydroxy-hydrocinnamid), C₃-C₁₅-Alkylester der 3,5-Bis(1,1-dimethyl)-4-hydroxybenzenpropansäure oder Gemische davon; Antioxidantien auf der Basis von Vitamin E oder Gemische davon; oder Gemische davon;
(ii) Antioxidantien auf Basis organischer Phosphite wie Tris-(2,4-di-*t-*butylphenyl)phosphit, Tris-2,4-bis(1,1-dimethylpropyl)phenylphosphit, Tris-4-(1,1-dimethylpropyl)phenylphosphit, Bis-[2,4-bis(1,1-dimethylpropyl)phenyl][4-(1,1-Dimethylpropyl)phenyl]phosphit, [2,4-Bis(1,1-dimethylpropyl)phenyl]-bis[4-(1,1-dimethylpropyl)phenyl]phosphit, Bis[tris-(2,4-di-*t*-butylphenyl)phosphit plus Distearyl-3,3-thiodipropionat (etwa 3 Gew.-% bezogen auf das Gewicht des Phosphits), Bis-(2,4-di-*t*-butylphenyl)pentaerythritoldiphosphit, Tetrakis-(2,4-di-*t*-butyl-phenyl)-4,4'-biphenylendiphosphonit, Tris-(*p*-nonylphenyl)phosphit, Di-iso-decylphenylphosphit, Diphenyl-*iso*-decylphosphit, Tri-*iso*-decylphosphit, Trilaurylphosphit oder Gemische davon; organische Phosphonate; organische Phosphonite; organische Phosphate wie Di(stearyl)pentaerythritoldiphosphit, Tetrakis(2,4-di-*t*-butylphenyl)-4,4'-biphenylendiphosphonit oder Gemische davon; oder Gemische davon;
oder Gemische davon;
(c) von 0 bis 15 Gew.-%, vorzugsweise von 3 bis 8 Gew.-%, mindestens eines organischen Lösungsmittels, ausgewählt aus: aromatischen Lösungsmitteln mit hohem Siedepunkt wie Benzol, Methylbenzol, Ethylbenzol, Xylol, Toluol oder Gemische davon; niedrigaromatische Kohlenwasserstofflösungsmittel (d. h. Aromatengehalt < 0,1) wie Kohlenwasserstofflösungsmittel der Spirdane^{®}-Reihe von Total oder Gemische davon;
(d) von 0 bis 30 Gew.-%, vorzugsweise von 5 bis 20 Gew.-%, mindestens eines zweiten Additivs, ausgewählt aus:
- Lichtstabilisatoren wie sterisch gehinderte Amine;
- UV-Stabilisatoren (UV-Absorber) wie: Triazine, Benzooxazinone, Benzotriazole, Benzophenone, Benzoate, Formamidine, Cinnamate oder Propenoate, aromatische Propandione, Benzoimidazole, cycloaliphatische Ketone, Formanilide einschließlich Oxamide, Cyanoacrylate, Benzopyranone, Salicylate oder Gemische davon;
- Metallstearate wie Zinkstearat, Calciumstearat, Magnesiumstearat oder Gemische davon;
- Alkohole wie *iso*-Propanol, *n*-Propanol, *iso*-Butanol, *n*-Butanol oder Gemische davon;
- Ketone wie Aceton, Methylethylketon, Dibenzylketon, Cyclohexanon oder Gemische davon;
- Ether wie Ethylether, Diethylether, Butylether, Dibutylether, Diphenylether, Dibenzylether oder Gemische davon;
- Glykole oder Polyalkylenglykole wie Ethylenglykol, Propylenglykol, Polyethylenglykol, Polypropylenglykol oder Gemische davon;
oder Gemische davon;
wobei die Summe aus (a) + (b) + (c) + (d) gleich 100 ist.

2. Paste mit einer hohen Konzentration eines exfolierten Schichtmaterials, umfassend:
(a) von 1 Gew.-% bis 20 Gew.-%, vorzugsweise von 10 Gew.-% bis 18 Gew.-%, mindestens eines exfolierten Schichtmaterials, ausgewählt aus: Graphen; Graphenoxid; reduziertem Graphenoxid; Graphen-Nanoplättchen;
(b) von 10 Gew.-% bis 90 Gew.-%, vorzugsweise von 15 Gew.-% bis 85 Gew.-%, mindestens eines ersten Additivs, ausgewählt aus bei Raumtemperatur flüssigen Stabilisatoren, ausgewählt aus:
(i) Antioxidantien auf Phenolbasis, wie sterisch gehinderte Phenole, wie 2,6-Di-*t*-butyl-4-methylphenol, 2,6-Di-*t*-butyl-4-nonylphenol, 2,2'-Methylen-bis-(4-methyl-6-*t*-butylphenol), 4,4'-Butyliden-bis-(2-*t*-butyl-5-methylphenol), 4,4'-Thio-bis-(2-*t*-butyl-5-methylphenol), 2,2'-Thio-bis(6-*t*-butyl-4-methylphenol), 2,5-Di-*t*-amylhydrochinon; sterisch gehinderte polymere Phenole, Tris-(3,5-di-*t*-butyl-4-hydroxybenzyl)isocyanurat, 2,2'-Thiodiethyl-bis-(3,5-di-*t*-butyl-4-hydroxyphenyl)propionat, 1,1,3-Tris-(2'-methyl-4'-hydroxy-5'-*t*-butylphenyl)butan, 2,2'-Methylen-bis-6-(1-Methylcyclohexyl)-*p*-kresol, 3,4-Dihydro-2,5,7,8-tetramethyl-2-(4,8,12-trimethyltridecyl)-2H-1-benzopyran-6-ol, 2,4-Dimethyl-6-(1-methylcyclohexyl)phenol, N,N'-Hexamethylenbis-(3,5-di-*t*-butyl-4-hydroxy-hydrocinnamid), C₃-C₁₅-Alkylester der 3,5-Bis(1,1-dimethyl)-4-hydroxybenzenpropansäure oder Gemische davon; Antioxidantien auf der Basis von Vitamin E oder Gemische davon; oder Gemische davon;
(ii) Antioxidantien auf Basis organischer Phosphite wie Tris-(2,4-di-*t-*butylphenyl)phosphit, Tris-2,4-bis(1,1-dimethylpropyl)phenylphosphit, Tris-4-(1,1-dimethylpropyl)phenylphosphit, Bis-[2,4-bis(1,1-dimethylpropyl)phenyl][4-(1,1-Dimethylpropyl)phenyl]phosphit, [2,4-Bis(1,1-dimethylpropyl)phenyl]-bis[4-(1,1-dimethylpropyl)phenyl]phosphit, Bis[tris-(2,4-di-*t*-butylphenyl)phosphit plus Distearyl-3,3-thiodipropionat (etwa 3 Gew.-% bezogen auf das Gewicht des Phosphits), Bis-(2,4-di-*t*-butylphenyl)pentaerythritoldiphosphit, Tetrakis-(2,4-di-*t*-butyl-phenyl)-4,4'-biphenylendiphosphonit, Tris-(*p*-nonylphenyl)phosphit, Di-*iso*-decylphenylphosphit, Diphenyl-*iso*-decylphosphit, Tri-*iso*-decylphosphit, Trilaurylphosphit oder Gemische davon; organische Phosphonate; organische Phosphonite; organische Phosphate wie Di(stearyl)pentaerythritoldiphosphit, Tetrakis(2,4-di-*t*-butylphenyl)-4,4'-biphenylendiphosphonit oder Gemische davon; oder Gemische davon;
oder Gemische davon;
(c) von 2 bis 15 Gew.-%, vorzugsweise von 3 bis 8 Gew.-%, mindestens eines organischen Lösungsmittels, ausgewählt aus: aromatischen Lösungsmitteln mit hohem Siedepunkt wie Benzol, Methylbenzol, Ethylbenzol, Xylol, Toluol oder Gemische davon; niedrigaromatische Kohlenwasserstofflösungsmittel (d. h. Aromatengehalt < 0,1) wie Kohlenwasserstofflösungsmittel der Spirdane^{®}-Reihe von Total oder Gemische davon;
wobei die Summe aus (a) + (b) + (c) gleich 100 ist.

3. Paste mit einer hohen Konzentration eines exfolierten Schichtmaterials, umfassend:
(a) von 1 Gew.-% bis 20 Gew.-%, vorzugsweise von 10 Gew.-% bis 18 Gew.-%, mindestens eines exfolierten Schichtmaterials, ausgewählt aus: Graphen; Graphenoxid; reduziertem Graphenoxid; Graphen-Nanoplättchen;
(b) von 10 Gew.-% bis 90 Gew.-%, vorzugsweise von 15 Gew.-% bis 85 Gew.-%, mindestens eines ersten Additivs, ausgewählt aus bei Raumtemperatur flüssigen Stabilisatoren, ausgewählt aus:
(i) Antioxidantien auf Phenolbasis, wie sterisch gehinderte Phenole, wie 2,6-Di-*t*-butyl-4-methylphenol, 2,6-Di-*t*-butyl-4-nonylphenol, 2,2'-Methylen-bis-(4-methyl-6-*t*-butylphenol), 4,4'-Butyliden-bis-(2-*t*-butyl-5-methylphenol), 4,4'-Thio-bis-(2-*t*-butyl-5-methylphenol), 2,2'-Thio-bis(6-t-butyl-4-methylphenol), 2,5-Di-*t*-amylhydrochinon; sterisch gehinderte polymere Phenole, Tris-(3,5-di-*t*-butyl-4-hydroxybenzyl)isocyanurat, 2,2'-Thiodiethyl-bis-(3,5-di-*t*-butyl-4-hydroxyphenyl)propionat, 1,1,3-Tris-(2'-methyl-4'-hydroxy-5'-*t*-butylphenyl)butan, 2,2'-Methylen-bis-6-(1-Methylcyclohexyl)-*p*-kresol, 3,4-Dihydro-2,5,7,8-tetramethyl-2-(4,8,12-trimethyltridecyl)-2H-1-benzopyran-6-ol, 2,4-Dimethyl-6-(1-methylcyclohexyl)phenol, N,N'-Hexamethylenbis-(3,5-di-*t*-butyl-4-hydroxy-hydrocinnamid), C₃-C₁₅-Alkylester der 3,5-Bis(1,1-dimethyl)-4-hydroxybenzenpropansäure oder Gemische davon; Antioxidantien auf der Basis von Vitamin E oder Gemische davon; oder Gemische davon;
(ii) Antioxidantien auf Basis organischer Phosphite wie Tris-(2,4-di-*t-*butylphenyl)phosphit, Tris-2,4-bis(1,1-dimethylpropyl)phenylphosphit, Tris-4-(1,1-dimethylpropyl)phenylphosphit, Bis-[2,4-bis(1,1-dimethylpropyl)phenyl][4-(1,1-Dimethylpropyl)phenyl]phosphit, [2,4-Bis(1,1-dimethylpropyl)phenyl]-bis[4-(1,1-dimethylpropyl)phenyl]phosphit, Bis[tris-(2,4-di-*t*-butylphenyl)phosphit plus Distearyl-3,3-thiodipropionat (etwa 3 Gew.-% bezogen auf das Gewicht des Phosphits), Bis-(2,4-di-*t*-butylphenyl)pentaerythritoldiphosphit, Tetrakis-(2,4-di-*t*-butyl-phenyl)-4,4'-biphenylendiphosphonit, Tris-(*p*-nonylphenyl)phosphit, Di-*iso*-decylphenylphosphit, Diphenyl-*iso*-decylphosphit, Tri-*iso*-decylphosphit, Trilaurylphosphit oder Gemische davon; organische Phosphonate; organische Phosphonite; organische Phosphate wie Di(stearyl)pentaerythritoldiphosphit, Tetrakis(2,4-di-*t*-butylphenyl)-4,4'-biphenylendiphosphonit oder Gemische davon; oder Gemische davon;
oder Gemische davon;
(d) von 1 bis 30 Gew.-%, vorzugsweise von 5 bis 20 Gew.-%, mindestens eines zweiten Additivs, ausgewählt aus:
- Lichtstabilisatoren wie sterisch gehinderte Amine;
- UV-Stabilisatoren (UV-Absorber) wie: Triazine, Benzooxazinone, Benzotriazole, Benzophenone, Benzoate, Formamidine, Cinnamate oder Propenoate, aromatische Propandione, Benzoimidazole, cycloaliphatische Ketone, Formanilide einschließlich Oxamide, Cyanoacrylate, Benzopyranone, Salicylate oder Gemische davon;
- Metallstearate wie Zinkstearat, Calciumstearat, Magnesiumstearat oder Gemische davon;
- Alkohole wie *iso*-Propanol, *n*-Propanol, *iso*-Butanol, *n*-Butanol oder Gemische davon;
- Ketone wie Aceton, Methylethylketon, Dibenzylketon, Cyclohexanon oder Gemische davon;
- Ether wie Ethylether, Diethylether, Butylether, Dibutylether, Diphenylether, Dibenzylether oder Gemische davon;
- Glykole oder Polyalkylenglykole wie Ethylenglykol, Propylenglykol, Polyethylenglykol, Polypropylenglykol oder Gemische davon;
oder Gemische davon;
wobei die Summe aus (a) + (b) + (d) gleich 100 ist.

4. Paste mit einer hohen Konzentration eines exfolierten Schichtmaterials nach Anspruch 1, umfassend:
(a) von 1 Gew.-% bis 20 Gew.-%, vorzugsweise von 10 Gew.-% bis 18 Gew.-%, mindestens eines exfolierten Schichtmaterials, ausgewählt aus: Graphen; Graphenoxid; reduziertem Graphenoxid; Graphen-Nanoplättchen;
(b) von 10 Gew.-% bis 90 Gew.-%, vorzugsweise von 15 Gew.-% bis 85 Gew.-%, mindestens eines ersten Additivs, ausgewählt aus bei Raumtemperatur flüssigen Stabilisatoren, ausgewählt aus:
(i) Antioxidantien auf Phenolbasis, wie sterisch gehinderte Phenole, wie 2,6-Di-*t*-butyl-4-methylphenol, 2,6-Di-*t*-butyl-4-nonylphenol, 2,2'-Methylen-bis-(4-methyl-6-*t*-butylphenol), 4,4'-Butyliden-bis-(2-*t*-butyl-5-methylphenol), 4,4'-Thio-bis-(2-*t*-butyl-5-methylphenol), 2,2'-Thio-bis(6-*t*-butyl-4-methylphenol), 2,5-Di-*t*-amylhydrochinon; sterisch gehinderte polymere Phenole, Tris-(3,5-di-*t*-butyl-4-hydroxybenzyl)isocyanurat, 2,2'-Thiodiethyl-bis-(3,5-di-*t*-butyl-4-hydroxyphenyl)propionat, 1,1,3-Tris-(2'-methyl-4'-hydroxy-5'-*t*-butylphenyl)butan, 2,2'-Methylen-bis-6-(1-Methylcyclohexyl)-*p*-kresol, 3,4-Dihydro-2,5,7,8-tetramethyl-2-(4,8,12-trimethyltridecyl)-2H-1-benzopyran-6-ol, 2,4-Dimethyl-6-(1-methylcyclohexyl)phenol, N,N'-Hexamethylenbis-(3,5-di-*t*-butyl-4-hydroxy-hydrocinnamid), C₃-C₁₅-Alkylester der 3,5-Bis(1,1-dimethyl)-4-hydroxybenzenpropansäure oder Gemische davon; Antioxidantien auf der Basis von Vitamin E oder Gemische davon; oder Gemische davon;
(ii) Antioxidantien auf Basis organischer Phosphite wie Tris-(2,4-di-*t-*butylphenyl)phosphit, Tris-2,4-bis(1,1-dimethylpropyl)phenylphosphit, Tris-4-(1,1-dimethylpropyl)phenylphosphit, Bis-[2,4-bis(1,1-dimethylpropyl)phenyl][4-(1,1-Dimethylpropyl)phenyl]phosphit, [2,4-Bis(1,1-dimethylpropyl)phenyl]-bis[4-(1,1-dimethylpropyl)phenyl]phosphit, Bis[tris-(2,4-di-*t*-butylphenyl)phosphit plus Distearyl-3,3-thiodipropionat (etwa 3 Gew.-% bezogen auf das Gewicht des Phosphits), Bis-(2,4-di-*t*-butylphenyl)pentaerythritoldiphosphit, Tetrakis-(2,4-di-*t*-butyl-phenyl)-4,4'-biphenylendiphosphonit, Tris-(*p*-nonylphenyl)phosphit, Di-*iso*-decylphenylphosphit, Diphenyl-*iso*-decylphosphit, Tri-*iso*-decylphosphit, Trilaurylphosphit oder Gemische davon; organische Phosphonate; organische Phosphonite; organische Phosphate wie Di(stearyl)pentaerythritoldiphosphit, Tetrakis(2,4-di-*t*-butylphenyl)-4,4'-biphenylendiphosphonit oder Gemische davon; oder Gemische davon;
oder Gemische davon;
(c) von 2 bis 15 Gew.-%, vorzugsweise von 3 bis 8 Gew.-%, mindestens eines organischen Lösungsmittels, ausgewählt aus: aromatischen Lösungsmitteln mit hohem Siedepunkt wie Benzol, Methylbenzol, Ethylbenzol, Xylol, Toluol oder Gemische davon; niedrigaromatische Kohlenwasserstofflösungsmittel (d. h. Aromatengehalt < 0,1) wie Kohlenwasserstofflösungsmittel der Spirdane^{®}-Reihe von Total oder Gemische davon;
(d) von 1 bis 30 Gew.-%, vorzugsweise von 5 bis 20 Gew.-%, mindestens eines zweiten Additivs, ausgewählt aus:
- Lichtstabilisatoren wie sterisch gehinderte Amine;
- UV-Stabilisatoren (UV-Absorber) wie: Triazine, Benzooxazinone, Benzotriazole, Benzophenone, Benzoate, Formamidine, Cinnamate oder Propenoate, aromatische Propandione, Benzoimidazole, cycloaliphatische Ketone, Formanilide einschließlich Oxamide, Cyanoacrylate, Benzopyranone, Salicylate oder Gemische davon;
- Metallstearate wie Zinkstearat, Calciumstearat, Magnesiumstearat oder Gemische davon;
- Alkohole wie *iso*-Propanol, *n*-Propanol, *iso*-Butanol, *n*-Butanol oder Gemische davon;
- Ketone wie Aceton, Methylethylketon, Dibenzylketon, Cyclohexanon oder Gemische davon;
- Ether wie Ethylether, Diethylether, Butylether, Dibutylether, Diphenylether, Dibenzylether oder Gemische davon;
- Glykole oder Polyalkylenglykole wie Ethylenglykol, Propylenglykol, Polyethylenglykol, Polypropylenglykol oder Gemische davon;
oder Gemische davon;
wobei die Summe aus (a) + (b) + (c) + (d) gleich 100 ist.

5. Paste mit einer hohen Konzentration eines exfolierten Schichtmaterials gemäß einem der vorstehenden Ansprüche, wobei die Teilchen des exfolierten Schichtmaterials (a) eine laterale Abmessung (x, y) von nicht mehr als 10000 nm, vorzugsweise im Bereich von 5 nm bis 5500 nm aufweisen.

6. Paste mit einer hohen Konzentration eines exfolierten Schichtmaterials gemäß einem der vorstehenden Ansprüche, wobei die Teilchen des exfolierten Schichtmaterials (a) eine Dicke (z) von nicht mehr als 50 nm, vorzugsweise im Bereich von 0,2 nm bis 15 nm, aufweisen.

7. Paste mit einer hohen Konzentration eines exfolierten Schichtmaterials gemäß einem der vorstehenden Ansprüche, wobei die Teilchen des exfolierten Schichtmaterials (a) eine BET-Oberfläche von mehr als 10 m²/g, vorzugsweise von mehr als 40 m²/g, aufweisen.

8. Paste mit einer hohen Konzentration eines exfolierten Schichtmaterials gemäß Anspruch 7, wobei die Teilchen des exfolierten Schichtmaterials (a) eine BET-Oberfläche im Bereich von 20 m²/g bis 3000 m²/g, vorzugsweise im Bereich von 300 m²/g bis 2600 m²/g, aufweisen.

9. Paste mit einer hohen Konzentration eines exfolierten Schichtmaterials gemäß einem der vorstehenden Ansprüche, wobei der bei Raumtemperatur flüssige Stabilisator (b) umfasst:
- von 10 Gew.-% bis 90 Gew.-%, vorzugsweise von 20 Gew.-% bis 80 Gew.-%, bezogen auf das Gesamtgewicht des flüssigen Stabilisators, eines Antioxidans, ausgewählt aus (i) Antioxidantien auf Phenolbasis;
- von 10 Gew.-% bis 90 Gew.-%, vorzugsweise von 20 Gew.-% bis 80 Gew.-%, bezogen auf das Gesamtgewicht des flüssigen Stabilisators, eines Antioxidans, ausgewählt aus (ii) Antioxidantien auf Basis organischer Phosphite.

10. Verfahren zur Herstellung einer Paste mit einer hohen Konzentration eines exfolierten Schichtmaterials nach einem der Ansprüche 1 bis 9, umfassend die folgenden Schritte:
(a₁) Mischen mindestens eines ersten Additivs, ausgewählt aus bei Raumtemperatur flüssigen Stabilisatoren, vorzugsweise mindestens eines Antioxidans, ausgewählt aus (i) Antioxidantien auf Phenolbasis, und mindestens eines Antioxidans, ausgewählt aus (ii) Antioxidantien auf Basis organischer Phosphite, gegebenenfalls mit mindestens einem organischen Lösungsmittel und/oder gegebenenfalls mit mindestens einem zweiten Additiv, ausgewählt aus: Lichtstabilisatoren, UV-Stabilisatoren (UV-Absorbern), Metallstearaten, Alkoholen, Ketonen, Ethern, Glykolen oder Polyalkylenglykolen, um ein Gemisch zu erhalten;
(b₁) Hinzufügen mindestens eines exfolierten Schichtmaterials zu dem in Schritt (a₁) erhaltenen Gemisch und Aussetzen dieses eines Mischens, wodurch eine Paste mit einer hohen Konzentration eines exfolierten Schichtmaterials erhalten wird;
(c₁) Gewinnen der in Schritt (b₁) erhaltenen Paste.

11. Verfahren zur Herstellung einer Paste mit einer hohen Konzentration eines exfolierten Schichtmaterials gemäß Anspruch 10, wobei:
- der Schritt (a₁) bei einer Temperatur im Bereich von 10°C bis 50°C, vorzugsweise im Bereich von 20°C bis 30°C, über einen Zeitraum im Bereich von 1 Minute bis 60 Minuten, vorzugsweise im Bereich von 2 Minuten bis 40 Minuten, bei einer Drehgeschwindigkeit im Bereich von 100 rpm bis 4000 rpm, vorzugsweise im Bereich von 1500 rpm bis 3000 rpm durchgeführt wird; und/oder
- der Schritt (b₁) bei einer Temperatur im Bereich von 10°C bis 50°C, vorzugsweise im Bereich von 20°C bis 30°C, über einen Zeitraum im Bereich von 1 Minute bis 60 Minuten, vorzugsweise im Bereich von 2 Minuten bis 40 Minuten, bei einer Drehgeschwindigkeit im Bereich von 100 rpm bis 4000 rpm, vorzugsweise im Bereich von 1500 rpm bis 3000 rpm durchgeführt wird.

## Revendications

1. Pâte à forte concentration en un matériau en couches exfolié comportant :
(a) de 1% en poids à 20 % en poids, de préférence de 10 % en poids à 18 % en poids, d'au moins un matériau en couches exfolié choisi parmi : le graphène ; l'oxyde de graphène ; l'oxyde de graphène réduit ; les nanoplaquettes de graphène ;
(b) de 10 % en poids à 90 % en poids, de préférence de 15 % en poids à 85 % en poids, d'au moins un premier additif choisi parmi les stabilisants liquides à température ambiante choisis parmi :
(i) les antioxydants à base de phénol tels que le phénol stériquement encombré tel que le 2,6-di-*t*-butyl-4-méthylphénol, le 2,6-di-*t*-butyl-4-nonyl-phénol, le 2,2'-méthylène-bis-(4-méthyl-6-*t*-butyl-phénol), le 4,4'-butylidène-bis-(2-*t*-butyl-5-méthyl-phénol), le 4,4'-thio-bis-(2-*t*-butyl-5-méthyl-phénol), le 2,2'-thio-bis(6-*t*-butyl-4-méthyl-phénol), la 2,5-di-*t*-amyl-hydroquinone ; les phénols polymères stériquement encombrés, le tris-(3,5-di-*t*-butyl-4-hydroxybenzyl)isocyanurate, le 2,2'-thiodiéthyl bis-(3,5-di-*t*-butyl-4-hydroxyphényl)propionate, le 1,1,3-tris-(2'-méthyl-4'-hydroxy-5'-*t*-butyl-phényl)butane, le 2,2'-méthylène-bis-6-(1-méthylcyclohexyl)-para-crésol, le 3,4-dihydro-2,5,7,8-tétraméthyl-2-(4,8,12-triméthyltridécyl)-2H-1-benzopyran-6-ol, le 2,4-diméthyl-6-(1-méthylcyclohexyl) phénol, le N-N'-hexaméthylènebis-(3,5-di-t-butyl-4-hydroxy-hydrocinnamide), les esters d'alkyle en C₃-C₁₅ d'acide 3,5-bis(1,1-diméthyl)4-hydroxy-benzènepropanoïque ou leurs mélanges ; les antioxydants à base de vitamine E ou leurs mélanges ; ou leurs mélanges ;
(ii) les antioxydants à base de phosphites organiques tels que le tris-(2,4-dit-butyl-phényl)phosphite, le tris-2,4-bis (1,1-diméthylpropyl)phénylphosphite, le tris-4-(1,1-diméthylpropyl)phénylphosphite, le bis-[2,4-bis(1,1-diméthylpropyl)phényl][4-(1,1-diméthylpropyl)phényl]phosphite, le [2,4-bis(1,1-diméthylpropyl)phényl]-bis[4-(1,1-diméthylpropyl)phényl]phosphite, le bis[tris-(2,4-di-*t*-butyl-phényl)-phosphite plus le distéaryl-3,3-thiodipropionate (environ 3 % en poids par rapport au poids du phosphite), le bis-(2,4-di-*t*-butyl-phényl)pentaérythritol-diphosphite, le tétrakis-(2,4-di-*t*-butyl-phényl)-4,4'-biphénylène-diphosphonite, le tris-(*p*-nonylphényl)phosphite, le di-*iso*-décyl-phényl-phosphite, le diphényl-*iso*-décyl phosphite, le tri-*iso*-décyle phosphite, le phosphite de trilauryle ou leurs mélanges ; les phosphonates organiques ; les phosphonites organiques ; les phosphates organiques tels que le di(stéaryl)pentaérythritol diphosphite, le tétrakis(2,4-di-*t*-butylphényl)-4,4'-biphénylène diphosphonite ou leurs mélanges ; ou leurs mélanges ;
ou leurs mélanges ;
(c) de 0 % en poids à 15 % en poids, de préférence de 3 % en poids à 8 % en poids, d'au moins un solvant organique choisi parmi : les solvants aromatiques à point d'ébullition élevé tels que le benzène, le méthylbenzène, l'éthylbenzène, le xylène, le toluène ou leurs mélanges ; les solvants hydrocarbonés faiblement aromatiques (c'est-à-dire avec une teneur aromatique ≤ 0,1) tels que les solvants hydrocarbonés de la gamme Spirdane^{®} de Total ou leurs mélanges ;
(d) de 0 % en poids à 30 % en poids, de préférence de 5 % en poids à 20 % en poids, d'au moins un deuxième additif choisi parmi :
- les photostabilisants tels que les amines stériquement encombrées ;
- les stabilisants UV (absorbeurs UV), tels que : les triazines, les benzooxazinones, les benzotriazoles, les benzophénones, les benzoates, les formamidines, les cinnamates ou propénoates, les propanediones aromatiques, les benzoimidazoles, les cétones cycloaliphatiques, les formanilides incluant les oxamides, les cyanoacrylates, les benzopyranones, les salicylates ou leurs mélanges ;
- les stéarates métalliques tels que le stéarate de zinc, le stéarate de calcium, le stéarate de magnésium ou leurs mélanges ;
- les alcools tels que l'iso-propanol, le n-propanol, l'iso-butanol, le n-butanol ou leurs mélanges ;
- les cétones telles que l'acétone, la méthyléthylcétone, la dibenzylcétone, la cyclohexanone ou leurs mélanges ;
- les éthers tels que l'éther éthylique, l'éther diéthylique, l'éther butylique, l'éther dibutylique, l'éther diphénylique, l'éther dibenzylique ou leurs mélanges ;
- les glycols ou polyalkylène glycols tels que l'éthylène glycol, le propylène glycol, le polyéthylène glycol, le polypropylène glycol ou leurs mélanges ;
ou leurs mélanges ;
la somme de (a) + (b) + (c) + (d) étant égale à 100.

2. Pâte à forte concentration en un matériau en couches exfolié comportant :
(a) de 1% en poids à 20 % en poids, de préférence de 10 % en poids à 18 % en poids, d'au moins un matériau en couches exfolié choisi parmi :
le graphène ; l'oxyde de graphène ; l'oxyde de graphène réduit ; les nanoplaquettes de graphène ;
(b) de 10 % en poids à 90 % en poids, de préférence de 15 % en poids à 85 % en poids, d'au moins un premier additif choisi parmi les stabilisants liquides à température ambiante choisis parmi :
(i) les antioxydants à base de phénol tels que le phénol stériquement encombré tel que le 2,6-di-t-butyl-4-méthylphénol, le 2,6-di-t-butyl-4-nonyl-phénol, le 2,2'-méthylène-bis-(4-méthyl-6-t-butyl-phénol), le 4,4'-butylidène-bis-(2-t-butyl-5-méthyl-phénol), le 4,4'-thio-bis-(2-t-butyl-5-méthyl-phénol), le 2,2'-thio-bis(6-t-butyl-4-méthyl-phénol), la 2,5-di-t-amyl-hydroquinone ; les phénols polymères stériquement encombrés, le tris-(3,5-di-t-butyl-4-hydroxybenzyl)isocyanurate, le 2,2'-thiodiéthyl bis-(3,5-di-t-butyl-4-hydroxyphényl)propionate, le 1,1,3-tris-(2'-méthyl-4'-hydroxy-5'-t-butyl-phényl)butane, le 2,2'-méthylène-bis-6-(1-méthylcyclohexyl)-para-crésol, le 3,4-dihydro-2,5,7,8-tétraméthyl-2-(4,8,12-triméthyltridécyl)-2H-1-benzopyran-6-ol, le 2,4-diméthyl-6-(1-méthyl-cyclohexyl) phénol, le N-N'-hexaméthylènebis-(3,5-di-t-butyl-4-hydroxy-hydrocinnamide), les esters d'alkyle en C3-C15 d'acide 3,5-bis(1,1-diméthyl)4-hydroxy-benzènepropanoïque ou leurs mélanges ; les antioxydants à base de vitamine E ou leurs mélanges ; ou leurs mélanges ;
(ii) les antioxydants à base de phosphites organiques tels que le tris-(2,4-dit-butyl-phényl)phosphite, le tris-2,4-bis(1,1-diméthylpropyl)phénylphosphite, le tris-4-(1,1-diméthylpropyl)phénylphosphite, le bis-[2,4-bis(1,1-diméthylpropyl)phényl][4-(1,1-diméthylpropyl)phényl]phosphite, le [2,4-bis(1,1-diméthylpropyl)phényl]-bis[4-(1,1-diméthylpropyl)phényl]phosphite, le bis[tris-(2,4-di-t-butyl-phényl)-phosphite plus le distéaryl-3,3-thiodipropionate (environ 3 % en poids par rapport au poids du phosphite), le bis-(2,4-di-t-butyl-phényl)pentaérythritol-diphosphite, le tétrakis-(2,4-di-t-butyl-phényl)-4,4'-biphénylène-diphosphonite, le tris-(p-nonylphényl)phosphite, le di-iso-décyl-phényl-phosphite, le diphényl-iso-décyl phosphite, le tri-iso-décyle phosphite, le phosphite de trilauryle ou leurs mélanges ; les phosphonates organiques ; les phosphonites organiques ; les phosphates organiques tels que le di(stéaryl)pentaérythritol diphosphite, le tétrakis(2,4-di-t-butylphényl)-4,4'-biphénylène diphosphonite ou leurs mélanges ; ou leurs mélanges ;
ou leurs mélanges ;
(c) de 2 % en poids à 15 % en poids, de préférence de 3 % en poids à 8 % en poids, d'au moins un solvant organique choisi parmi : les solvants aromatiques à point d'ébullition élevé tels que le benzène, le méthylbenzène, l'éthylbenzène, le xylène, le toluène ou leurs mélanges ; les solvants hydrocarbonés faiblement aromatiques (c'est-à-dire avec une teneur aromatique ≤ 0,1) tels que les solvants hydrocarbonés de la gamme Spirdane^{®} de Total, ou leurs mélanges ;
la somme de (a) + (b) + (c) étant égale à 100.

3. Pâte à forte concentration en un matériau en couches exfolié comportant :
(a) de 1 % en poids à 20 % en poids, de préférence de 10 % en poids à 18 % en poids, d'au moins un matériau en couches exfolié choisi parmi :
le graphène ; l'oxyde de graphène ; l'oxyde de graphène réduit ; les nanoplaquettes de graphène ;
(b) de 10 % en poids à 90 % en poids, de préférence de 15 % en poids à 85 % en poids, d'au moins un premier additif choisi parmi les stabilisants liquides à température ambiante choisis parmi :
(i) les antioxydants à base de phénol tels que le phénol stériquement encombré tel que le 2,6-di-t-butyl-4-méthylphénol, le 2,6-di-t-butyl-4-nonyl-phénol, le 2,2'-méthylène-bis-(4-méthyl-6-t-butyl-phénol), le 4,4'-butylidène-bis-(2-t-butyl-5-méthyl-phénol), le 4,4'-thio-bis-(2-t-butyl-5-méthyl-phénol), le 2,2'-thio-bis(6-t-butyl-4-méthyl-phénol), la 2,5-di-t-amyl-hydroquinone ; les phénols polymères stériquement encombrés, le tris-(3,5-di-t-butyl-4-hydroxybenzyl)isocyanurate, le 2,2'-thiodiéthyl bis-(3,5-di-t-butyl-4-hydroxyphényl)propionate, le 1,1,3-tris-(2'-méthyl-4'-hydroxy-5'-t-butyl-phényl)butane, le 2,2'-méthylène-bis-6-(1-méthylcyclohexyl)-para-crésol, le 3,4-dihydro-2,5,7,8-tétraméthyl-2-(4,8,12-triméthyltridécyl)-2H-1-benzopyran-6-ol, le 2,4-diméthyl-6-(1-méthylcyclohexyl) phénol, le N-N'-hexaméthylènebis-(3,5-di-t-butyl-4-hydroxy-hydrocinnamide), les esters d'alkyle en C3-C15 d'acide 3,5-bis(1,1-diméthyl)4-hydroxy-benzènepropanoïque ou leurs mélanges ; les antioxydants à base de vitamine E ou leurs mélanges ; ou leurs mélanges ;
(ii) les antioxydants à base de phosphites organiques tels que le tris-(2,4-dit-butyl-phényl)phosphite, le tris-2,4-bis (1,1-diméthylpropyl)phénylphosphite, le tris-4-(1,1-diméthylpropyl)phénylphosphite, le bis-[2,4-bis(1,1-diméthylpropyl)phényl][4-(1,1-diméthylpropyl)phényl]phosphite, le [2,4-bis(1,1-diméthylpropyl)phényl]-bis[4-(1,1-diméthylpropyl)phényl]phosphite, le bis[tris-(2,4-di-t-butyl-phényl)-phosphite plus le distéaryl-3,3-thiodipropionate (environ 3 % en poids par rapport au poids du phosphite), le bis-(2,4-di-t-butyl-phényl)pentaérythritol-diphosphite, le tétrakis-(2,4-di-t-butyl-phényl)-4,4'-biphénylène-diphosphonite, le tris-(p-nonylphényl)phosphite, le di-iso-décyl-phényl-phosphite, le diphényl-iso-décyl phosphite, le tri-iso-décyle phosphite, le phosphite de trilauryle ou leurs mélanges ; les phosphonates organiques ; les phosphonites organiques ; les phosphates organiques tels que le di(stéaryl)pentaérythritol diphosphite, le tétrakis(2,4-di-t-butylphényl)-4,4'-biphénylène diphosphonite ou leurs mélanges ;
ou leurs mélanges ;
(d) de 1 % en poids à 30 % en poids, de préférence de 5 % en poids à 20 % en poids, d'au moins un deuxième additif choisi parmi :
- les photostabilisants tels que les amines stériquement encombrées ;
- les stabilisants UV (absorbeurs UV), tels que : les triazines, les benzooxazinones, les benzotriazoles, les benzophénones, les benzoates, les formamidines, les cinnamates ou propénoates, les propanediones aromatiques, les benzoimidazoles, les cétones cycloaliphatiques, les formanilides incluant les oxamides, les cyanoacrylates, les benzopyranones, les salicylates ou leurs mélanges ;
- les stéarates métalliques tels que le stéarate de zinc, le stéarate de calcium, le stéarate de magnésium ou leurs mélanges ;
- les alcools tels que l'iso-propanol, le n-propanol, l'iso-butanol, le n-butanol ou leurs mélanges ;
- les cétones telles que l'acétone, la méthyléthylcétone, la dibenzylcétone, la cyclohexanone ou leurs mélanges ;
- les éthers tels que l'éther éthylique, l'éther diéthylique, l'éther butylique, l'éther dibutylique, l'éther diphénylique, l'éther dibenzylique ou leurs mélanges ;
- les glycols ou polyalkylène glycols tels que l'éthylène glycol, le propylène glycol, le polyéthylène glycol, le polypropylène glycol ou leurs mélanges ;
ou leurs mélanges ;
la somme de (a) + (b) + (d) étant égale à 100.

4. Pâte à forte concentration en un matériau en couches exfolié selon la revendication 1, comportant :
(a) de 1 % en poids à 20 % en poids, de préférence de 10 % en poids à 18 % en poids, dudit au moins un matériau en couches exfolié choisi parmi : le graphène ; l'oxyde de graphène ; l'oxyde de graphène réduit ; les nanoplaquettes de graphène ;
(b) de 10 % en poids à 90 % en poids, de préférence de 15 % en poids à 85 % en poids, dudit au moins un premier additif choisi parmi les stabilisants liquides à température ambiante choisis parmi :
(i) les antioxydants à base de phénol tels que le phénol stériquement encombré tel que le 2,6-di-t-butyl-4-méthylphénol, le 2,6-di-t-butyl-4-nonyl-phénol, le 2,2'-méthylène-bis-(4-méthyl-6-t-butyl-phénol), le 4,4'-butylidène-bis-(2-t-butyl-5-méthyl-phénol), le 4,4'-thio-bis-(2-t-butyl-5-méthyl-phénol), le 2,2'-thio-bis(6-t-butyl-4-méthyl-phénol), la 2,5-di-t-amyl-hydroquinone ; les phénols polymères stériquement encombrés, le tris-(3,5-di-t-butyl-4-hydroxybenzyl)isocyanurate, le 2,2'-thiodiéthyl bis-(3,5-di-t-butyl-4-hydroxyphényl)propionate, le 1,1,3-tris-(2'-méthyl-4'-hydroxy-5'-t-butyl-phényl)butane, le 2,2'-méthylène-bis-6-(1-méthylcyclohexyl)-para-crésol, le 3,4-dihydro-2,5,7,8-tétraméthyl-2-(4,8,12-triméthyltridécyl)-2H-1-benzopyran-6-ol, le 2,4-diméthyl-6-(1-méthylcyclohexyl) phénol, le N-N'-hexaméthylènebis-(3,5-di-t-butyl-4-hydroxy-hydrocinnamide), les esters d'alkyle en C3-C15 d'acide 3,5-bis(1,1-diméthyl)4-hydroxy-benzènepropanoïque ou leurs mélanges ; les antioxydants à base de vitamine E ou leurs mélanges ; ou leurs mélanges ;
(ii) les antioxydants à base de phosphites organiques tels que le tris-(2,4-dit-butyl-phényl)phosphite, le tris-2,4-bis (1,1-diméthylpropyl)phénylphosphite, le tris-4-(1,1-diméthylpropyl)phénylphosphite, le bis-[2,4-bis(1,1-diméthylpropyl)phényl][4-(1,1-diméthylpropyl)phényl]phosphite, le [2,4-bis(1,1-diméthylpropyl)phényl]-bis[4-(1,1-diméthylpropyl)phényl]phosphite, le bis[tris-(2,4-di-t-butyl-phényl)-phosphite plus le distéaryl-3,3-thiodipropionate (environ 3 % en poids par rapport au poids du phosphite), le bis-(2,4-di-t-butyl-phényl)pentaérythritol-diphosphite, le tétrakis-(2,4-di-t-butyl-phényl)-4,4'-biphénylène-diphosphonite, le tris-(p-nonylphényl)phosphite, le di-iso-décyl-phényl-phosphite, le diphényl-iso-décyl phosphite, le tri-iso-décyle phosphite, le phosphite de trilauryle ou leurs mélanges ; les phosphonates organiques ; les phosphonites organiques ; les phosphates organiques tels que le di(stéaryl)pentaérythritol diphosphite, le tétrakis(2,4-di-t-butylphényl)-4,4'-biphénylène diphosphonite ou leurs mélanges ; ou leurs mélanges ;
ou leurs mélanges ;
(c) de 2 % en poids à 15 % en poids, de préférence de 3 % en poids à 8 % en poids, dudit au moins un solvant organique choisi parmi : les solvants aromatiques à point d'ébullition élevé tels que le benzène, le méthylbenzène, l'éthylbenzène, le xylène, le toluène ou leurs mélanges ; les solvants hydrocarbonés faiblement aromatiques (c'est-à-dire avec une teneur aromatique ≤ 0,1) tels que les solvants hydrocarbonés de la gamme Spirdane^{®} de Total ou leurs mélanges ;
(d) de 1 % en poids à 30 % en poids, de préférence de 5 % en poids à 20 % en poids, dudit au moins un deuxième additif choisi parmi :
- les photostabilisants tels que les amines stériquement encombrées ;
- les stabilisants UV (absorbeurs UV), tels que : les triazines, les benzooxazinones, les benzotriazoles, les benzophénones, les benzoates, les formamidines, les cinnamates ou propénoates, les propanediones aromatiques, les benzoimidazoles, les cétones cycloaliphatiques, les formanilides incluant les oxamides, les cyanoacrylates, les benzopyranones, les salicylates ou leurs mélanges ;
- les stéarates métalliques tels que le stéarate de zinc, le stéarate de calcium, le stéarate de magnésium ou leurs mélanges ;
- les alcools tels que l'iso-propanol, le n-propanol, l'iso-butanol, le n-butanol ou leurs mélanges ;
- les cétones telles que l'acétone, la méthyléthylcétone, la dibenzylcétone, la cyclohexanone ou leurs mélanges ;
- les éthers tels que l'éther éthylique, l'éther diéthylique, l'éther butylique, l'éther dibutylique, l'éther diphénylique, l'éther dibenzylique ou leurs mélanges ;
- les glycols ou polyalkylène glycols tels que l'éthylène glycol, le propylène glycol, le polyéthylène glycol, le polypropylène glycol ou leurs mélanges ;
ou leurs mélanges ;
la somme de (a) + (b) + (c) + (d) étant égale à 100.

5. Pâte à forte concentration en un matériau en couches exfolié selon l'une quelconque des revendications précédentes, dans laquelle les particules dudit matériau en couches exfolié (a) ont une dimension latérale (x, y) n'excédant pas 10 000 nm, de préférence allant de 5 nm à 5 500 nm.

6. Pâte à forte concentration en un matériau en couches exfolié selon l'une quelconque des revendications précédentes, dans laquelle les particules dudit matériau en couches exfolié (a) ont une épaisseur (z) n'excédant pas 50 nm, de préférence allant de 0,2 nm à 15 nm.

7. Pâte à forte concentration en un matériau en couches exfolié selon l'une quelconque des revendications précédentes, dans laquelle les particules dudit matériau en couches exfolié (a) ont une surface spécifique BET supérieure à 10 m²/g, de préférence supérieure à 40 m²/g.

8. Pâte à forte concentration en un matériau en couches exfolié selon la revendication 7, dans laquelle les particules dudit matériau en couches exfolié (a) ont une surface spécifique BET allant de 20 m²/g à 3 000 m²/g, de préférence allant de 300 m²/g à 2 600 m²/g.

9. Pâte à forte concentration en un matériau en couches exfolié selon l'une quelconque des revendications précédentes, dans laquelle ledit stabilisant liquide à température ambiante (b) comporte :
- de 10 % en poids à 90 % en poids, de préférence de 20 % en poids à 80 % en poids, par rapport au poids total dudit stabilisant liquide, d'un antioxydant choisi parmi (i) les antioxydants à base de phénol ;
- de 10 % en poids à 90 % en poids, de préférence de 20 % en poids à 80 % en poids, par rapport au poids total dudit stabilisant liquide, d'un antioxydant choisi parmi (ii) les antioxydants à base de phosphites organiques.

10. Procédé de préparation d'une pâte à forte concentration en un matériau en couches exfolié selon l'une quelconque des revendications 1 à 9, comportant les étapes suivantes :
(a₁) le mélange d'au moins un premier additif choisi parmi les stabilisants liquides à température ambiante, de préférence au moins un antioxydant choisi parmi (i) les antioxydants à base de phénol et au moins un antioxydant choisi parmi (ii) les antioxydants à base de phosphites organiques avec, facultativement, au moins un solvant organique et/ou avec, facultativement, au moins un deuxième additif choisi parmi : les photostabilisants, les stabilisants de rayonnement ultraviolet (absorbeurs UV), les stéarates métalliques,
les alcools, les cétones, les éthers, les glycols ou les polyalkylène glycols, pour obtenir un mélange ;
(b₁) l'ajout d'au moins un matériau en couches exfolié au mélange obtenu à l'étape (a₁) et la soumission de celui-ci à un mélange, pour ainsi obtenir une pâte à forte concentration en un matériau en couches exfolié ;
(c₁) la récupération de la pâte obtenue à l'étape (b₁).

11. Procédé de préparation d'une pâte à forte concentration en un matériau en couches exfolié selon la revendication 10, dans lequel :
- ladite étape (a₁) est réalisée à une température allant de 10 °C à 50 °C, de préférence allant de 20 °C à 30 °C, pendant une durée allant de 1 minute à 60 minutes, de préférence allant de 2 minutes à 40 minutes, à une vitesse de rotation allant de 100 tr/min à 4 000 tr/min, de préférence allant de 1 500 tr/min à 3 000 tr/min ; et/ou
- ladite étape (b₁) est réalisée à une température allant de 10 °C à 50 °C, de préférence allant de 20 °C à 30 °C, pendant une durée allant de 1 minute à 60 minutes, de préférence allant de 2 minutes à 40 minutes, à une vitesse de rotation allant de 100 tr/min à 4 000 tr/min, de préférence allant de 1 500 tr/min à 3 000 tr/min.
